# EUROPÄISCHE PATENTSCHRIFT

(11) **EP 1 243 485 B1**
(45) Veröffentlichungstag und Bekanntmachung des Hinweises auf die Patenterteilung: **17.11.2004**
(21) Anmeldenummer: 02006266.7
(22) Anmeldetag: 20.03.2002
(51) Int. Cl.: B64D 25/06, B60R 22/12

(54) **Hosenträgergurt**
Safety harness
Harnais de sécurité

(30) Priorität: 23.03.2001 DE 10114343
(43) Veröffentlichungstag der Anmeldung: 25.09.2002
(73) Patentinhaber: Schroth Safety Products GmbH, 59757 Arnsberg (DE)
(72) Erfinder: Carl Jürgen , Schroth, 59494 Soest (DE)
(74) Vertreter: Bockermann, Rolf, Dipl.-Ing.

(56) Entgegenhaltungen:
- FR-A- 2 414 087
- GB-A- 1 187 677
- US-A- 4 231 616
- US-A- 4 660 605
- US-A- 5 242 745

## Beschreibung

Die Erfindung betrifft einen Hosenträgergurt nach dem Oberbegriff der Anspruchs 1. Ein derartiger Hosenträgergurt ist z.B. aus der GB-A- 1 187 677 bekannt.

Hosenträgergurte stellen Personenrückhaltesysteme dar, die sich unter Integration eines Gurtschlosses mindestens aus einem zweiteiligen Beckengurt und zwei an den Beckengurt angeschlossenen Schultergurten zusammensetzen. Des Weiteren sind Hosenträgergurte bekannt, die zusätzlich noch wenigstens einen Schrittgurt aufweisen.

Solche Hosenträgergurte können ihre bestmögliche Wirksamkeit nur entfalten, wenn die einzelnen Gurte die Körper von Fahrzeuginsassen (Luft-, Wasser-, Landfahrzeuge) nicht nur gut umschlingen, sondern auch an den Last aufnehmenden Strukturen der Körper satt anliegen. Solche Last aufnehmenden Strukturen sind die Becken, Brustkörbe und Schultern.

Hosenträgergurte sind, wie auch andere Gurtsysteme, im wesentlichen für einen Frontalaufprall entwickelt, getestet und gebaut worden. Zum zusätzlichen Schutz der Köpfe sind ferner aufblasbare Rückhaltesysteme bekannt, deren Technologie so ausgefeilt ist, dass sie auch bei Unfällen mit einem nicht rechtwinkligen Aufprall einen adäquaten Schutz bieten.

Bei einem Seitenaufprall geht die Fachwelt bislang eher davon aus, dass ein Unfallgegner oder ein anderes Hindernis in ein Fahrzeug eindringt und frühzeitig die Innenstruktur mit den darin befindlichen Insassen kontaktiert.

Die Rückhaltefunktionen bei einem Heckaufprall werden durchweg durch die Sitzlehnen und die Kopfstützen eines Fahrzeugs wahrgenommen.

Ein besonderes Problem bei Renn- und Luftfahrzeugen ergibt sich bei den dort oft üblichen Hosenträgergurten dadurch, dass unterstützende aufblasbare Rückhaltesysteme fehlen und die Schultergurte symmetrisch hinter den Fahrzeuginsassen verankert werden. Hierbei sollen für eine gute Umschlingung die Schultergurte hinter den Fahrzeuginsassen zusammengeführt werden. Aufgrund der nur kurzen Distanzen von den Fahrzeuginsassen bis zu den Verankerungen an den Fahrzeugen erfolgt jedoch kein vollständiges Zusammenführen, sondern nur ein tendenzielles Zusammenrücken der nach wie vor getrennten Verankerungen. Durch das enge Heranführen der Schultergurte hinter den Fahrzeuginsassen wird angestrebt, dass sowohl bei einem vorwärts gerichteten Aufprall als auch bei Aufprallszenarien im Winkel dazu kurzfristig eine gute Kraftanbindung über die Schultergurte mit den Fahrzeugen erfolgt und die jeweils der Stoßrichtung abgewandten Schultergurte sicher auf den Schultern verbleiben. Ein Hinausdrehen der Oberkörper aus den Gurtsystemen kann hierdurch vermieden werden.

Die fehlenden aufblasbaren Rückhaltesysteme in Renn- und Luftfahrzeugen haben zur Entwicklung eines Rückhaltesystems unter dem Begriff HANS (Head And Neck Support) geführt. HANS stellt eine harte Kragenstruktur dar, die sich mit zwei vorderen Enden bis auf ca. Brusthöhe erstreckt, über die Schultern um den Nacken herum geschlossen ist und eine nach oben ragende Krause aufweist, an welche der Schutzhelm eines Fahrzeuginsassens an beiden Seiten mittels flexibler Verbindungen befestigt ist. Diese Kragenstruktur wird durch die Schultergurte eines Hosenträgergurts am Körper des Fahrzeuginsassens gehalten. Durch die auf den Schultern liegende Kragenstruktur wird zum einen die konkave Gestaltung der Schulterpartie eines Fahrzeuginsassens aufgehoben und zum anderen ist die Kragenstruktur in diesem Bereich so schmal gehalten, dass bei einer weit zurück liegenden Sitzposition eines Fahrzeuginsassens, wie sie insbesondere in Rennfahrzeugen der Formelklassen eingenommen wird, die Arme zum Bedienen des Lenkrads und anderer Einheiten im Fahrzeug ungehindert nach vorne gestreckt werden können. Dadurch ist aber im Falle eines Frontaufpralls leicht die Gefahr eines Abrutschens der Schultergurte von der Kragenstruktur gegeben.

Da die Kragenstruktur gemäß HANS eine gute Abdeckung des Halses gegenüber den über die Schultern verlaufenden Schultergurten gewährleistet, können auch die Schultergurtverankerungen hinter dem Nacken eng zusammengeführt werden. Durch eine solche Verbesserung ist der Oberkörper besser gegen laterale Bewegungen gesichert. Im Falle eines Aufpralls unter einem Winkel zur Längsrichtung des Fahrzeugs wird auch das Herausdrehen des Oberkörpers aus dem der Aufprallrichtung abgewandten Schultergurt stark erschwert.

Das Zusammenrücken der Verankerungspunkte hinter dem Nacken eines Fahrzeuginsassens führt indessen zu einer verstärkten Teilumschlingung der Kragenstruktur mit der Folge, dass der Verlauf der dem Brustbein abgewandten Gurtkanten der Schultergurte im Vergleich zum Verlauf der dem Brustbein benachbarten Gurtkanten zwischen der Befestigung an dem zu einem Hosenträgergurt gehörenden Zentralverschluss bis zu den Verankerungspunkten verschieden lang ist. Aufgrund dieser geometrischen Gegebenheiten liegen dann aber die Schultergurte nur noch hinsichtlich der dem Brustbein abgewandten Gurtkanten an der Kragenstruktur an. Hierdurch wird ein Abrutschen der Schultergurte von der Kragenstruktur geradezu provoziert. Außerdem wird in einem Belastungsfall nicht die gesamte Breite der Schultergurte mit der Last beaufschlagt, sondern es werden nur die Bereiche belastet, die den dem Brustbein abgewandten Gurtkanten benachbart sind. Die Gefahr von Gurtbrüchen wird hierdurch erhöht.

Um diesem Nachteil zu begegnen, könnte man zwar die Dicke der Schultergurte heraufsetzen. In dem real anzunehmenden Lastbereich würde dann aber die Gurtdehnung deutlich reduziert mit dem Ergebnis, dass die auf einen Fahrzeuginsassen einwirkenden Belastungsspitzen erhöht würden.

Diesem Umstand und den daraus resultierenden Nachteilen könnte man wiederum dadurch entgegenwirken, dass man der Kragenstruktur von HANS eine zum Hals des Fahrzeuginsassens ansteigende Schräge gibt. Dies hat jedoch den Nachteil, dass eine derartige Rampe erst recht zum Abgleiten der Schultergurte führen würde.

Denkbar wäre darüberhinaus, dass die Schultergurte im Halsbereich unterbrochen und die Längenabschnitte der geteilten Schultergurte mittels Metallringen gelenkig miteinander verbunden werden. Solch eine Ausführung hat indessen den Nachteil, dass es keine gleichmäßige Reibungsbindung mit einer getragenen Kragenstruktur mehr gibt bzw. ein Fahrzeuginsasse ohne eine HANS Kragenstruktur durch solche Metallteile im Halsbereich gefährdet würde.

Der Erfindung liegt - ausgehend vom Stand der Technik-die Aufgabe zugrunde, einen Hosenträgergurt, insbesondere in Verbindung mit einer HANS Kragenstruktur, bei Sportfahrzeugen zu Land und zu Wasser sowie bei Luftfahrzeugen zu schaffen, der bei einer verbesserten Gurtführung eine höhere Sicherheit für einen Fahrzeuginsassen gewährleistet.

Die Lösung dieser Aufgabe wird nach der Erfindung in den Merkmalen des Patentanspruchs 1 gesehen.

Kern der Erfindung sind sich bogenförmig über den Brustkorb eines Fahrzeuginsassens erstreckende Schultergurte, die über ihre gesamte Länge flach am Brustkorb und an den Schultern liegen. Dieser bogenförmige Verlauf der Schultergurte wird bereits bei ihrer Herstellung gezielt dadurch erzeugt, dass die dem Brustbein benachbarten Gurtkanten kürzer als die dem Brustbein abgewandten Gurtkanten bemessen werden. Diese Gestaltung kann sich über die gesamte Länge der Schultergurte oder nur über einen Längenabschnitt, insbesondere einen mittleren Längenabschnitt im Bereich des Brustkorbs, erstrecken. Derart ausgebildete Schultergurte gewährleisten einen stetig flachen Verlauf entlang der Last aufnehmenden Strukturen des Körpers eines Fahrzeuginsassens bei einwandfreier Umschlingung seines Halses. Ein Abrutschen solcher Schultergurte von einer HANS Kragenstruktur wird vermieden. Dadurch wird auch die Gefahr von Gurtbrüchen unterbunden. Die Dicke der Schultergurte braucht nicht heraufgesetzt werden. Damit wird auch keine schädliche Reduzierung der Gurtdehnung hervorgerufen. Ferner werden dem Körper des Fahrzeuginsassens keine erhöhten Belastungsspitzen zugemutet.

Eine Ausführungsform zur Schaffung einwandfrei bogenförmig verlaufender Schultergurte besteht in den Merkmalen des Patentanspruchs 2. Hierbei werden die unterschiedlich langen Gurtkanten durch einen oder mehrere quer über die Schultergurte verlaufende Abnäher erzeugt, die keilförmig Bereiche der Schultergurte zusammenfassen.

Im Umfang der Ausführungsform der Merkmale des Patentanspruchs 3 werden die Schultergurte zur Erzielung von Längenabschnitten mit ungleich langen Gurtkanten zumindest einmal quer geteilt. Die neben der Teilung verbleibenden Enden der Schultergurte werden dann durch mindestens ein Brückenband so verbunden, dass die Enden des Brückenbands sich mit den Enden der Teillängen der Schultergurte keilförmig überlappen. Die Verbindungen können durch eine Naht oder mehrere geeignete Nähte hergestellt werden. Auch andere Last aufnehmende und dauerhafte Verbindungsmittel sind denkbar.

Sowohl bei der Ausführungsform gemäß den Merkmalen des Patentanspruchs 2 als auch denen des Patentanspruchs 3 ist es entsprechend den Merkmalen des Patentanspruchs 4 möglich, die Abnäher bzw. Brückenbänder sowie ungleich lange Gurtkanten aufweisenden Längenabschnitte der Schultergurte mit im Bereich der kürzeren Gurtkanten angeordneten und mit den Schultergurten verbundenen Trägerbändern zu versehen. Diese Trägerbänder erhöhen die Festigkeit bei einer unfallbedingten Belastung. Sie sind schmaler als die Schultergurte gehalten. Sie können mit den Schultergurten vernäht oder durch andere geeignete Verbindungen gekoppelt sein. Diesen Trägerbändern werden solche Dehnungseigenschaften vermittelt, dass ihr Charakter auch unter Berücksichtigung des Reißverhaltens der Abnäher bzw. der Brückenbänder gleichartig mit dem der Gurtbereiche ist, die sich entlang der dem Brustbein abgewandten längeren Gurtkanten erstrecken.

Werden Schultergurte zumindest teilweise aus unter Wärmeeinwirkung schrumpfenden Kunststofffasern hergestellt, so kann dieser Schrumpfungseffekt genutzt werden, um bogenförmige Schultergurte bereitzustellen. In diesem Zusammenhang können entsprechend Patentanspruch 5 zur Herstellung der Längenabschnitte mit ungleich langen Gurtkanten entweder den Gurtkanten benachbarte Gurtbereiche zeitlich verschieden lang derselben Temperatur oder einer unterschiedlichen Temperatur bei im wesentlichen gleichmäßiger Einflussdauer ausgesetzt werden. Auf diese Weise können die einer höheren Temperatur ausgesetzten Bereiche einer stärkeren Längenschrumpfung unterworfen und damit bogenförmige Schultergurte erzeugt werden.

Im Falle von gewebten Schultergurten besteht gemäß Patentanspruch 6 zur Schaffung ungleich lange Gurtkanten aufweisender Längenabschnitte ein Vorschlag darin, von den dem Brustbein abgewandten Gurtkanten ausgehend in Richtung auf die anderen Gurtkanten eine steigende Anzahl von Schussfäden und/oder sich im Querschnitt verdickende Schussfäden vorzusehen. Die Erhöhung der Anzahl der Schussfäden kann dabei stufenweise oder kontinuierlich durchgeführt werden. Sie führt zu einer entsprechend höheren Zahl von Mäandern der Kettfäden und somit zu einer relativen Verkürzung der dem Brustbein benachbarten Gurtkanten der Schultergurte.

Bei der Verwebung von dickeren Schussfäden wird ebenfalls durch die jeweils stärkere Mäandrierung der Kettfäden eine relative Verkürzung der dem Brustbein benachbarten Gurtkanten erreicht. Außerdem führt die sich durch die verdickten Schussfäden ergebende Dicke der dem Brustbein benachbarten Gurtkanten zu einer erhöhten Akzeptanz des Hosenträgergurts, da die Einschneidgefahr, insbesondere im Halsbereich, geringer ist.

Um eine stärkere Kompression der dickeren Schussfäden gegenüber den dünneren Schussfäden zu verhindern, können nach Patentanspruch 7 die im Querschnitt dickeren Schussfäden monofil ausgebildet sein.

Die Verkürzung der dem Brustbein benachbarten Gurtkanten der Schultergurte kann entsprechend den Merkmalen des Patentanspruchs 8 aber auch dadurch erreicht werden, dass die gewebten Schultergurte von den dem Brustbein abgewandten Gurtkanten ausgehend in Richtung auf die anderen Gurtkanten mit sich in ihrer Längsspannung gleichförmig oder stufenweise erhöhenden Kettfäden versehen werden.

Zur Schaffung der angestrebten bogenförmigen Schultergurte ist es erfindungsgemäß ferner denkbar, dass verschiedene der in den Patentansprüchen aufgeführten Maßnahmen gemeinsam angewendet werden.

Die bei den Schultergurten eines Hosenträgergurts zur gezielten Anpassung an die Last aufnehmenden Strukturen des Körpers eines Fahrzeuginsassens vorgenommenen Maßnahmen können nach Patentanspruch 9 mit Vorteil auch bei einem Hosenträgergurt angewendet werden, der einen sogenannten Doppelschrittgurt aufweist. Solche bogenförmigen Schrittgurte passen sich dann ebenfalls den Körperstrukturen exakt an, so dass auf diese Weise insbesondere ein 6-Punkt-Hosenträgergurt geschaffen wird, welcher mit Vorteil bei zu Wasser und zu Land genutzten Sportfahrzeugen bzw. bei Luftfahrzeugen zum Einsatz gelangen kann.

Die Erfindung ist nachfolgend anhand von in den Zeichnungen dargestellten Ausführungsbeispielen näher erläutert. Es zeigen:
- Figur 1: in hälftiger Frontalansicht den Oberkörper eines Fahrzeuginsassens mit angelegtem Hosenträgergurt;
- Figur 2: in vergrößerter Darstellung einen Längenabschnitt eines Schultergurts des Hosenträgergurts der Figur 1 gemäß einer ersten Ausführungsform;
- Figur 3: in vergrößerter Darstellung einen Längenabschnitt eines Schultergurts des Hosenträgergurts der Figur 1 gemäß einer zweiten Ausführungsform;
- Figur 4: in vergrößerter Darstellung einen Längenabschnitt eines Schultergurts des Hosenträgergurts der Figur 1 gemäß einer dritten Ausführungsform;
- Figur 5: in vergrößerter Darstellung einen Längenabschnitt eines Schultergurts des Hosenträgergurts der Figur 1 gemäß einer vierten Ausführungsform mit zusätzlichem Detail;
- Figur 6: in vergrößerter Darstellung einen Längenabschnitt eines Schultergurts des Hosenträgergurts der Figur 1 gemäß einer fünften Ausführungsform mit zusätzlichem Detail und
- Figur 7: in vergrößerter Darstellung einen Längenabschnitt eines Schultergurts des Hosenträgergurts der Figur 1 gemäß einer sechsten Ausführungsform.

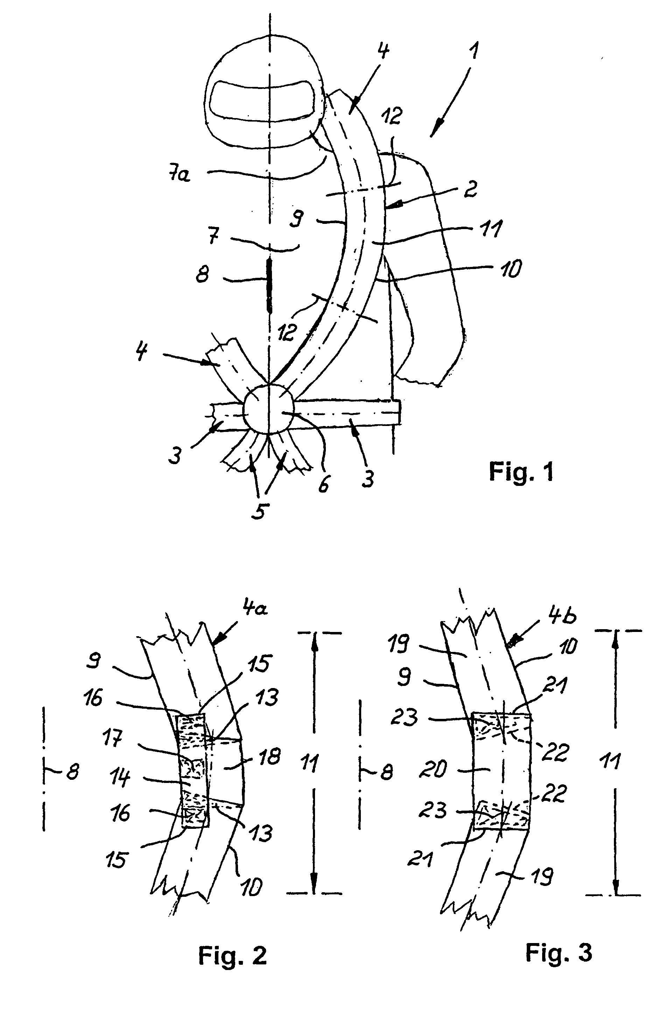

In der Figur 1 ist mit 1 schematisch ein Fahrzeuginsasse eines Formel-Rennwagens bezeichnet. Der Fahrzeuginsasse 1 trägt einen Hosenträgergurt 2 in Form eines 6-Punkt-Hosenträgergurts. Der Hosenträgergurt 2 setzt sich aus einem zweiteiligen Beckengurt 3, zwei Schultergurten 4 und zwei Schrittgurten 5 zusammen, die an einem gemeinsamen zentralen Gurtschloss 6 zusammengeführt sind.

Die Schultergurte 4 weisen einen an die Last aufnehmenden Strukturen des Brustkorbs 7 angepassten bogenförmigen Verlauf auf. Das flache Anliegen der Schultergurte 4 am Brustkorb 7 und an den Schultern 7a wird durch eine Verkürzung der dem schematisch veranschaulichten Brustbein 8 benachbarten Gurtkante 9 im Vergleich zu der dem Brustbein 8 abgewandten Gurtkante 10 einschließlich der an die Gurtkanten 9 und 10 angrenzenden Gurtbereiche erzielt.

Der bogenförmige Verlauf der Schultergurte 4 kann auf verschiedene Weise erreicht werden.

Bei der Ausführungsform der Figur 2 sind in einem mittleren Längenabschnitt 11 jedes Schultergurts 4a (in Figur 1 zwischen den strichpunktierten Linien 12 liegend) keilförmige Abnäher 13 hergestellt worden, wodurch die dem Brustbein 8 benachbarte Gurtkante 9 kürzer als die dem Brustbein 8 abgewandte Gurtkante 10 ausgebildet ist. Die Abnäher 13 sind durch ein schmaler als die Schultergurte 4a gehaltenes Trägerband 14 abgedeckt, welches an seinen Enden 15 und beim Ausführungsbeispiel auch zwischen den beiden Abnähern 13 fest mit dem Schultergurt 4a vernäht ist. Die Nähbereiche sind mit 16 und 17 bezeichnet. Das Trägerband 14 ist in seiner Dehnungseigenschaft so ausgelegt, dass es sich auch unter Berücksichtigung des Reißverhaltens der Abnäher 13 unter Belastung gleichartig mit dem dem Brustbein 8 abgewandten Bereich 18 des Schultergurts 4a dehnt.

Bei der Ausführungsform der Figur 3 ist jeder Schultergurt 4b im Längenabschnitt 11 einmal quergeteilt. Die Teillängen 19 des Schultergurts 4b werden durch ein Brückenband 20 miteinander verbunden, dessen Enden 21 die Enden 22 der Teillängen 19 keilförmig überlappen. Die sich überlappenden Enden 21, 22 sind durch Nähte 23 miteinander verbunden. Auch auf diese Weise wird die dem Brustbein 8 benachbarte Gurtkante 9 kürzer gestaltet als die dem Brustbein 8 abgewandte Gurtkante 10.

Das Trägerband 14 gemäß der Ausführungsform der Figur 2 kann auch bei der Ausführungsform der Figur 3 in angepasster Form zusätzlich verwendet werden.

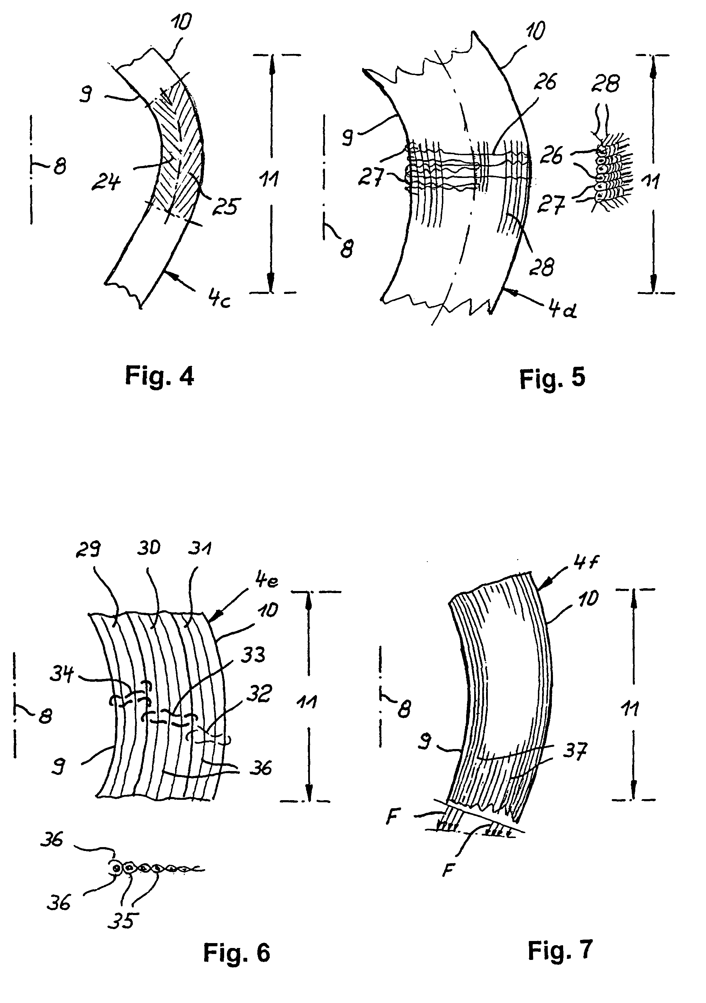

Die Figur 4 zeigt einen Längenabschnitt 11 eines Schultergurts 4c, der zumindest teilweise aus unter Wärmeeinwirkung schrumpfenden Kunststofffasern hergestellt ist. Um bei einem solchen Schultergurt 4c den bogenförmigen Verlauf zu erzielen, sind, wie durch die Schraffierungen veranschaulicht, die den Gurtkanten 9, 10 benachbarten Gurtbereiche 24, 25 entweder zeitlich verschieden lang mit derselben Temperatur oder mit unterschiedlicher Temperatur bei im wesentlichen gleichmäßiger Einflussdauer beaufschlagt worden. Auf diese Weise stellt sich von der dem Brustbein 8 abgewandten Gurtkante 10 aus bis zur anderen Gurtkante 9 eine stetig erhöhende Schrumpfung ein, welche zu den unterschiedlichen Längen der Gurtkanten 9, 10 führt.

Im Rahmen der Ausführungsform eines Schultergurts 4d gemäß Figur 5 einschließlich perspektivischen Details ist der Längenabschnitt 11 eines gewebten Schultergurts 4d von der dem Brustbein 8 abgewandten Gurtkante 10 ausgehend in Richtung auf die andere Gurtkante 9 mit einer steigenden Anzahl von Schussfäden 26 versehen. Die Erhöhung der Anzahl der Schussfäden 26 von der Gurtkante 10 aus bis zur anderen Gurtkante 9 kann stetig oder in Stufen durchgeführt werden. Dadurch wird eine entsprechend höhere Zahl von Mäandern 27 der Kettfäden 28 und somit eine Verkürzung der dem Brustbein 8 benachbarten Gurtkante 9 im Vergleich zu der Länge der Gurtkante 10 erreicht.

Bei der in der Figur 6 dargestellten Ausführungsform eines Schultergurts 4e werden die zwischen den Gurtkanten 9, 10 liegenden Gurtbereiche 29, 30, 31 mit unterschiedlich dicken Schussfäden 32, 33, 34 verwebt (siehe auch die zugehörige Detaildarstellung) und durch die von der einen Gurtkante 10 zur anderen Gurtkante 9 stärker werdende Mäandrierung 35 der Kettfäden 36 wird eine relative Verkürzung der dem Brustbein 8 benachbarten Gurtkante 9 sowie im Vergleich zu der gegenüberliegenden Gurtkante 10 sowie im Vergleich des Gurtbereichs 31 zum Gurtbereich 30 und des Gurtbereichs 30 zum Gurtbereich 29 und damit der bogenförmige Verlauf des Schultergurts 4e erreicht. Auch können die Schussfäden 33, 34 der Gurtbereiche 30, 29 im Vergleich zu den dünneren Schussfäden 32 des Gurtbereichs 31 aus monofilen Fäden bestehen.

Schließlich kann noch eine Ausführungsform eines bogenförmigen Schultergurts 4f gemäß Figur 7 dadurch hergestellt werden, dass die Kettfäden 37 des gewebten Schultergurts 4f stetig oder in abgestimmten Stufen mit sich von der dem Brustbein 8 abgewandten Gurtkante 10 in Richtung zur anderen Gurtkante 9 erhöhender Kettfadenspannung F verwebt werden, so dass wiederum unterschiedlich lange Gurtkanten 9, 10 entstehen.

Die anhand der Figuren 2 bis 7 geschilderten verschiedenen Möglichkeiten zur Erzeugung des bogenförmigen Verlaufs der Schultergurte 4a-4f können in entsprechender Weise auch auf die in der Figur 1 dargestellten Schrittgurte 5 des Hosenträgergurts 2 übertragen werden.

### Bezugszeichenaufstellung

- 1 -: Fahrzeuginsasse
- 2 -: Hosenträgergurt
- 3 -: Beckengurt
- 4 -: Schultergurte
- 4a -: Schultergurt
- 4b -: Schultergurt
- 4c -: Schultergurt
- 4d -: Schultergurt
- 4e -: Schultergurt
- 4f -: Schultergurt
- 5 -: Schrittgurte
- 6 -: Gurtschloss
- 7 -: Brustkorb
- 7a -: Schultern
- 8 -: Brustbein
- 9 -: kurze Gurtkante
- 10 -: lange Gurtkante
- 11 -: Längenabschnitt v. 4
- 12 -: Linien
- 13 -: Abnäher an 4a
- 14 -: Trägerband auf 4a
- 15 -: Enden v. 14
- 16 -: Nähbereiche zw. 4a u. 14
- 17 -: Nähbereich an 18
- 18 -: Bereich v. 4a
- 19 -: Teillängen v. 4b
- 20 -: Brückenband f. 4b
- 21 -: Enden v. 20
- 22 -: Enden v. 19
- 23 -: Nähte zw. 21 u. 22
- 24 -: Bereich v. 4c neben 9
- 25 -: Bereich v. 4c neben 10
- 26 -: Schussfäden v. 4d
- 27 -: Mäander v. 4d
- 28 -: Kettfäden v. 4d
- 29 -: Gurtbereich v. 4e
- 30 -: Gurtbereich v. 4e
- 31 -: Gurtbereich v. 4e
- 32 -: Schussfaden in 31
- 33 -: Schussfaden in 30
- 34 -: Schussfaden in 29
- 35 -: Mäandierung v. 4e
- 36 -: Kettfäden v. 4e
- 37 -: Kettfäden v. 4f

- F -: Kettfädenspannung

## Patentansprüche

1. Hosenträgergurt mit einem Beckengurt (3) und zwei flach am Brustkorb (7) und an den Schultern (7a) anliegenden Schultergurten (4, 4a-f), **dadurch gekennzeichnet, daß** die dem Brustbein (8) zugewandten Gurtkanten (9) in jeweils wenigstens einem mittleren Längenabschnitt (11) kürzer als die dem Brustbein (8) abgewandten Gurtkanten (10) in diesem Längenabschnitt (11) bemessen sind.

2. Hosenträgergurt nach Patentanspruch 1, bei welchem die Schultergurte (4a) in den Längenabschnitten (11) mit ungleich langen Gurtkanten (9, 10) mindestens einen keilförmigen Abnäher (13) aufweisen.

3. Hosenträgergurt nach Patentanspruch 1, bei welchem die Schultergurte (4b) in den Längenabschnitten (11) mit ungleich langen Gurtkanten (9, 10) quer geteilt und jeweils durch mindestens ein Brückenband (20) verbunden sind, das mit seinen Enden (21) die Enden (22) der Teillängen (19) der Schultergurte (4b) keilförmig überlappt.

4. Hosenträgergurt nach Patentanspruch 2 oder 3, bei welchem die Abnäher (13) bzw. Brückenbänder (20) sowie ungleich lange Gurtkanten (9, 10) aufweisenden Längenabschnitte (11) mit im Bereich der kürzeren Gurtkanten (9) angeordneten und mit den Schultergurten (4a, 4b) verbundenen Trägerbändern (14) versehen sind.

5. Hosenträgergurt nach Patentanspruch 1 mit zumindest teilweise aus unter Wärmeeinwirkung schrumpfenden Kunststofffasern hergestellten Schultergurten (4c), bei welchem die Längenabschnitte (11) mit ungleich langen Gurtkanten (9, 10) hinsichtlich der den Gurtkanten (9, 10) benachbarten Gurtbereiche (24, 25) zeitlich verschieden lang mit derselben Temperatur oder mit unterschiedlicher Temperatur bei im wesentlichen gleichmäßiger Einflussdauer beaufschlagt worden sind.

6. Hosenträgergurt nach Patentanspruch 1, bei welchem die ungleich lange Gurtkanten (9, 10) aufweisenden Längenabschnitte (11) gewebter Schultergurte (4d, 4e) von den längeren Gurtkanten (10) ausgehend in Richtung auf die kürzeren Gurtkanten (9) mit einer steigenden Anzahl von Schussfäden (26) und/oder mit sich im Querschnitt verdickenden Schussfäden (32, 33, 34) versehen sind.

7. Hosenträgergurt nach Patentanspruch 6, bei welchem die im Querschnitt dickeren Schussfäden (33, 34) monofil ausgebildet sind.

8. Hosenträgergurt nach Patentanspruch 1, bei welchem die ungleich lange Gurtkanten (9, 10) aufweisenden Längenabschnitte (11) gewebter Schultergurte (4f) von den längeren Gurtkanten (10) ausgehend in Richtung auf die kürzeren Gurtkanten (9) mit sich in ihrer Längsspannung (F) gleichförmig oder stufenweise erhöhenden Kettfäden (37) versehen sind.

9. Hosenträgergurt nach einem der Patentansprüche 1 bis 8 mit zwei Schrittgurten (5) in der Anwendung der Merkmale der Patentansprüche 1 bis 8 auf die Schrittgurte (5).

## Claims

1. A harness comprising a waist strap (3) and two shoulder straps (4, 4a - 4f) bearing flat against the chest (7) and against the shoulders (7a), **characterised in that** the strap edges (9) facing the sternum (8) are, in each case at least in a central length portion (11), shorter than the strap edges (10) remote from the sternum (8) in said length portion (11).

2. A harness according to claim 1, wherein the shoulder straps (4a) have at least one wedge-shaped pleat (13) in the length portions (11) having unequally long belt straps (9).

3. A harness according to claim 1, wherein the shoulder straps (4b) are transversely divided in the length portions (11) having unequally long strap edges (9, 10) and are in each case connected by at least one bridge band (20) the ends (21) of which overlap in the form of a wedge the ends (22) of the partial lengths (19) of the shoulder straps (4b).

4. A harness according to claim 2 or 3, wherein the length portions (11) having pleats (13) and bridge bands (20) and unequally long strap edges (9, 10) are provided with carrier bands (14) disposed in the region of the shorter strap edges (9) and connected to the shoulder straps (4a, 4b).

5. A harness according to claim 1, with shoulder straps (4c) made at least partially of plastic fibres which shrink under the action of heat, wherein the length portions (11) with unequally long strap edges (9, 10) have been subjected, in respect of the strap zones (24, 25) adjacent the strap edges (9, 10), to the same temperature for different lengths of time or to different temperatures for substantially uniform times of action.

6. A harness according to claim 1, wherein the length portions (11) of woven shoulder straps (4d, 4e) having unequally long strap edges (9, 10) are provided, starting from the longer strap edges (10) towards the shorter strap edges (9), with an increasing number of weft threads (26) and/or with weft threads (32, 33, 34) which increase in thickness in cross-section.

7. A harness according to claim 6, wherein the weft threads (33, 34) of thicker cross-section are of monofil construction.

8. A harness according to claim 1, wherein the length portions (11) of woven shoulder straps (4f) having unequally long strap edges (9, 10) are provided, starting from the longer strap edges (10) in the direction of the shorter strap edges (9), with warp threads (37) the longitudinal tension (F) of which increases uniformly or stepwise.

9. A harness according to any one of claims 1 to 8, with two thigh straps (5) in the application of the features of claims 1 to 8 to the thigh straps (5).

## Revendications

1. Harnais de sécurité comportant une ceinture abdominale (3) et deux sangles pectorales (4, 4a-f) plaquant à plat sur la cage thoracique (7) et sur les épaules (7a), **caractérisé en ce que** les bords de la ceinture (9) dirigés vers le sternum (8) sont plus courts sur au moins un tronçon longitudinal central (11) que les bords de la ceinture (10) opposés au sternum (8) sur ce tronçon longitudinal (11).

2. Harnais de sécurité selon la revendication 1, dans lequel les sangles pectorales (4a) présentent sur les tronçons longitudinaux (11) aux bords de ceinture (9, 10) de longueur différente au moins une pince (13) en forme de soufflet.

3. Harnais de sécurité selon la revendication 1, dans lequel les sangles pectorales (4b) sont divisées transversalement sur les tronçons longitudinaux (11) aux bords de ceinture (9, 10) de longueur différente et sont chacune reliées par au moins un baudrier (20) dont les extrémités (21) chevauchent les extrémités (22) des segments (19) des sangles pectorales (4b) en forme de soufflet.

4. Harnais de sécurité selon la revendication 2 ou 3, dans lequel les tronçons longitudinaux (11) présentant des pinces (13) respectivement des baudriers (20) ainsi que des bords de ceinture (9, 10) de longueur différente sont dotés de bandes de support (14) disposées au niveau des bords de ceinture (9) plus courts et reliées aux sangles pectorales (4a, 4b).

5. Harnais de sécurité selon la revendication 1 comportant au moins en partie des sangles pectorales (4c) fabriquées en fibres plastiques rétractables sous l'effet de la chaleur, dans lequel les tronçons longitudinaux (11) aux bords de ceinture de longueur différente (9, 10), du point de vue des zones de ceinture (24, 25) voisines des bords de ceinture (9, 10), ont été soumis à la même température pendant des temps différents ou à des températures différentes sur une durée essentiellement homogène.

6. Harnais de sécurité selon la revendication 1, dans lequel les tronçons longitudinaux (11) présentant des bords de ceinture (9, 10) de longueur différente de sangles pectorales (4d, 4e) tissées à partir des bords de ceinture (10) plus longs en direction des bords de ceinture (9) plus courts, sont dotés d'un nombre croissant de fils de trame (26) et/ou de fils de trame (32, 33, 34) dont la section s'épaissit.

7. Harnais de sécurité selon la revendication 6, dans lequel les fils de trame (33, 34) plus épais en section sont monofils.

8. Harnais de sécurité selon la revendication 1, dans lequel les tronçons longitudinaux (11) présentant les bords de ceinture de longueur différente (9, 10) de sangles pectorales (4f) tissées à partir des bords de ceinture (10) plus longs en direction des bords de ceinture (9) plus court), sont dotés de fils de chaîne (37) dont la tension longitudinale (F) augmente de manière régulière ou par paliers.

9. Harnais de sécurité selon l'une quelconque des revendications 1 à 8 comportant deux sangles pectorales (5) en application des caractéristiques des revendications 1 à 8 sur les sangles d'entrejambes (5).
